# NEUE EUROPÄISCHE PATENTSCHRIFT

(11) **EP 2 176 053 B2**
(45) Veröffentlichungstag und Bekanntmachung des Hinweises auf die Entscheidung über den Einspruch: **26.08.2015**
(45) Hinweis auf die Patenterteilung: 03.11.2010
(21) Anmeldenummer: 08734405.7
(22) Anmeldetag: 14.03.2008
(51) Int. Cl.: B29C 49/42, B29C 49/58

(54) **VORRICHTUNG ZUM BLASFORMEN VON BEHÄLTERN**
DEVICE FOR BLOW-MOLDING CONTAINERS
DISPOSITIF DE SOUFFLAGE DE RÉCIPIENTS

(30) Priorität: 18.07.2007 WO PCT/DE2007/001278
(43) Veröffentlichungstag der Anmeldung: 21.04.2010
(73) Patentinhaber: KHS Corpoplast GmbH, 22145 Hamburg (DE); Norgren AG, 8362 Balterswil (CH)
(72) Erfinder: BAUER, Ken, 8360 Wallenwil (CH); LINKE, Michael, 22047 Hamburg (DE); LITZENBERG, Michael, 21502 Geesthacht (DE); KELLER, Matthias, CH-9500 Wil (CH); ABDERHALDEN, Daniel, CH-9000 St. Gallen (CH); BOOS, Philipp, 8362 Balterswil (CH)
(74) Vertreter: Hausfeld, Norbert
(86) Internationale Anmeldenummer: PCT/DE2008/000467
(87) Internationale Veröffentlichungsnummer: WO 2009/010024

(56) Entgegenhaltungen:
- DE-U1- 20 018 500
- FR-A1- 2 872 082

## Beschreibung

Die Erfindung betrifft eine Vorrichtung zur Blasformung von Behältern, die mindestens eine Blasstation mit einer Blasform aufweist, sowie bei der sich ein Strömungsweg für ein Blasgas zur Blasformung der Behälter durch ein Anschlußelement hindurch erstreckt, das einen Ventilträger aufweist, der mindestens ein Ventil haltert. Gemäß dem oberbegriff des Anspruchs 1 wird so eine vorrichtung in Dokument DE-U-20018500 offenbart.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälter-formung wird in der DE-OS 42 12 583 beschrieben. Mög-lichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Bei allen bekannten Blasgaszuführungen werden zur Steuerung der Blasgaszufuhr Ventile verwendet. Verbreitet ist insbesondere die Verwendung von elektromagnetisch ansteuerbaren Ventilen. Eingänge der Ventile sind über Verbindungsleitungen mit Druckgasversorgungen verbunden. Nach einem Öffnen der Ventile wird sowohl ein vom Ventil bis zum Vorformling bzw. zum Behälter verlaufender Strömungsweg als auch ein Innenraum des Vorformlings bzw. des Behälters mit dem Druckgas beaufschlagt. Dies bedeutet, daß zur Erreichung eines angestrebten Druckniveaus innerhalb des Vorformlings bzw. des Behälters so viel Druckgas durch das Ventil hindurchströmen muß, daß sowohl der Bereich des Strömungsweges als auch der entsprechende Innenraum des Vorformlings bzw. des Behälters mit einer ausreichenden Menge an Druckgas gefüllt ist.

Das Volumen des Strömungsweges hat somit eine Verzögerung des angestrebten Druckaufbaues im Vorformling bzw. im Behälter zur Folge, da zusätzlich zur eigentlich benötigten Menge an Druckgas auch die zur Füllung des Strömungsweges erforderliche Menge an Druckgas durch das Ventil hindurchströmen muß. Neben der entsprechenden Prozeßverzögerung resultiert hieraus auch ein erhöhter Verbrauch an Druckgas mit entsprechend erhöhten Betriebskosten.

Aufgabe der vorliegenden Erfindung ist es, eine Vorrichtung der einleitend genannten Art derart zu konstruieren, daß Totraumvolumina im Bereich der Blasgaszuführung vermindert werden.

Diese Aufgabe wird erfindungsgemäß durch die kennzeichnenden Merkmale des Patentanspruchs 1 gelöst.

Durch die ringartige Anordnung des ventils ist es möglich, das Ventil mit äußerst kurzem räumlichen Abstand zur Blasform sowie zum herzustellenden Behälter zu positionieren. Es werden hierdurch sehr kurze Strömungswege bereitgestellt, die zu einer Verminderung des Blasgasverbrauches sowie zu einer Verminderung von Verzögerungszeiten führen. Darüber hinaus ist der Blasvorgang exakter steuerbar. Es wird insbesondere eine Minimierung eines Totraumvolumens erreicht.

Eine kompakte Ausführungsform wird dadurch unterstützt, daß das Ventil in einer Längsrichtung des Ventilträgers positionierbar angeordnet ist.

Eine gleichmäßige Krafteinleitung in den Ventilträger wird dadurch unterstützt, daß sich ein Ventilkörper des Ventils im wesentlichen koaxial zu einem Hauptkanal des Ventilkörpers erstreckt.

Ein geringes Baugewicht wird dadurch unterstützt, daß das Ventil pneumatisch betätigt ausgebildet ist.

Geringe Strömungswiderstände können dadurch erreicht werden, daß der Ventilkörper bereichsweise von einem ringartigen Versorgungsraum umgeben ist.

Insbesondere ist daran gedacht, daß der Versorgungsraum relativ zum Hauptkanal außenseitig am Ventilkörper angeordnet ist.

Zur Einbringung von Positionierkräften wird vorgeschlagen, daß der Ventilkörper buchsenartig ausgebildet und mit einem Ventilflansch verbunden ist. Das Ventil erhält hierdurch eine kolbenartige Gestaltung.

Eine pneumatische Steuerbarkeit wird dadurch unterstützt, daß der Ventilflansch in einem Steuerraum angeordnet ist.

Zur Bereitstellung eines einfachen elektrischen Steuerungskonzeptes wird vorgeschlagen, daß der Steuerraum mit einem Pilotventil verbunden ist.

Gemäß einer typischen Ausführungsform ist vorgesehen, daß im Bereich des Hauptkanales eine Reckstange angeordnet ist.

Eine preiswerte und leicht montierbare Ausführungsform wird dadurch erreicht, daß jeweils ein in einem Modulgehäuse angeordnetes Ventil ein Ventilmodul ausbildet.

Erfindungsgemäß sind mindestens zwei Ventilmodule in einer Längsrichtung des Ventilkörpers übereinander angeordnet.

Zur Bereitstellung einer hohen mechanischen Stabilität und pneumatischen Dichtigkeit wird vorgeschlagen, daß die Ventilmodule abdichtend gegeneinander verspannt angeordnet sind.

Die konstruktive Realisierung kann dadurch noch weiter vereinfacht werden, daß der Ventilkörper in einer Verschlußpositionierung mit einer Dichtfläche gegen eine Andruckfläche geführt ist, die von einem benachbarten Ventilmodul bereitgestellt ist.

Eine Druckregelung wird dadurch unterstützt, daß im Bereich des Ventilträgers mindestens ein Drucksensor angeordnet ist.

In den Zeichnungen sind Ausführungsbeispiele der Erfindung schematisch dargestellt. Es zeigen:
- Fig. 1: Eine perspektivische Darstellung einer Blas- station zur Herstellung von Behältern aus Vor- formlingen,
- Fig. 2: einen Längsschnitt durch eine Blasform, in der ein Vorformling gereckt und expandiert wird,
- Fig. 3: eine Skizze zur Veranschaulichung eines grund- sätzlichen Aufbaus einer Vorrichtung zur Blas- formung von Behältern,
- Fig. 4: eine modifizierte Heizstrecke mit vergrößerter Heizkapazität,
- Fig. 5: eine Seitenansicht einer Blasstation, bei der eine Reckstange von einem Reckstangenträger posi-tioniert wird und
- Fig. 6: einen Längsschnitt durch einen Anschlußkolben zur Zuführung von Blasgas, bei dem die Blas- ventile im Bereich eines beweglichen Teiles des Anschluß-elementes angeordnet sind sowie einen Hauptkanal ringartig umgeben,
- Fig. 7: eine vergrößerte Darstellung einer Ventilan- ordnung, bei der eine Mehrzahl von Ventilmodu- len stapelartig aufeinander angeordnet sind und
- Fig. 8: eine vergrößerte Darstellung von drei überein- ander angeordneten Ventilmodulen.

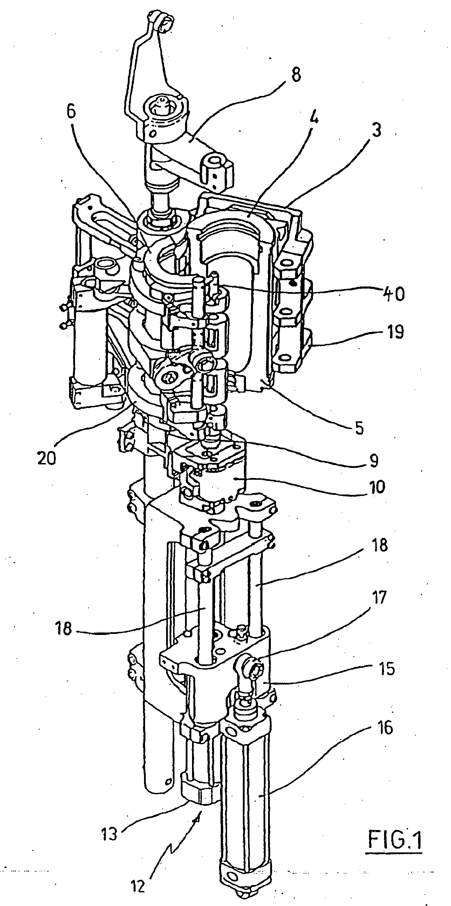

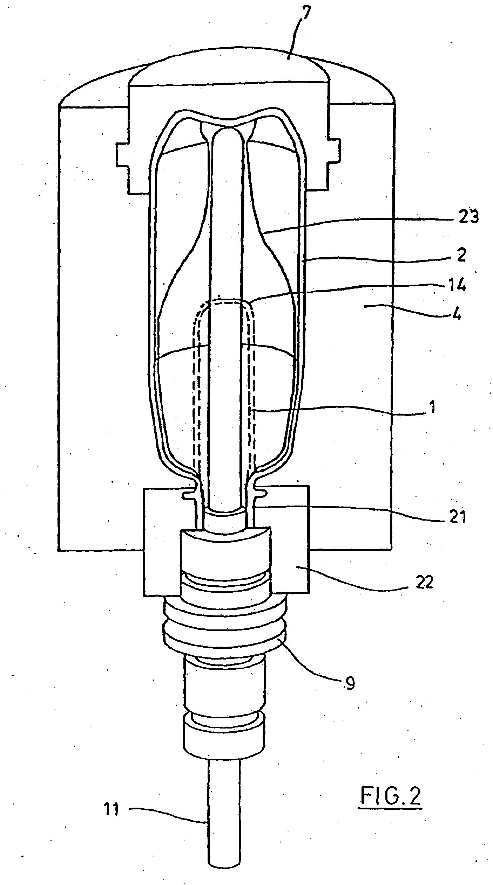

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwerdung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

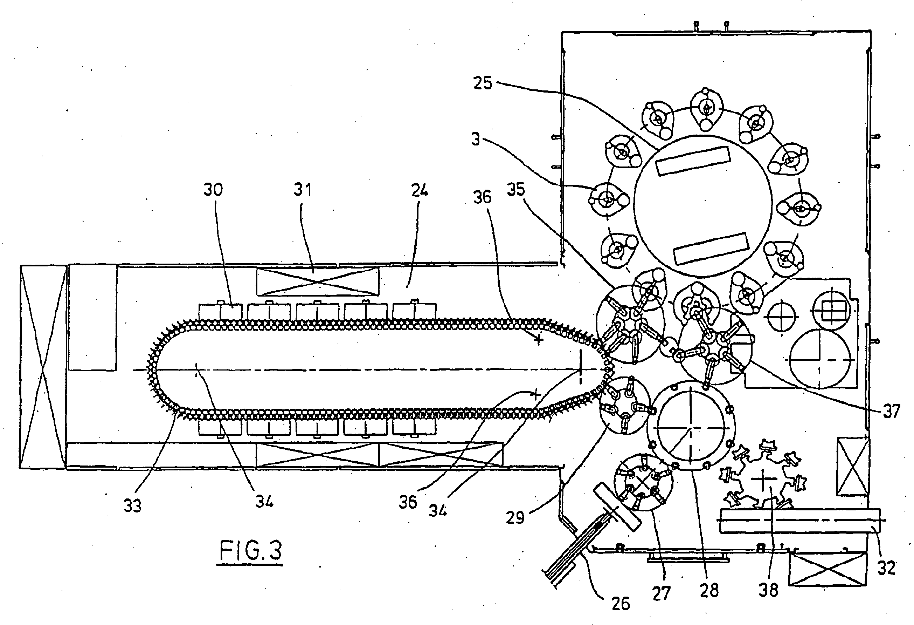

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

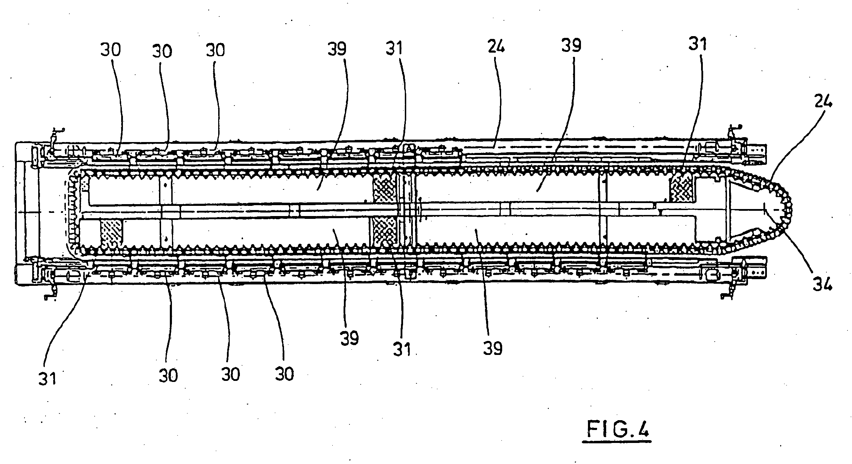

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

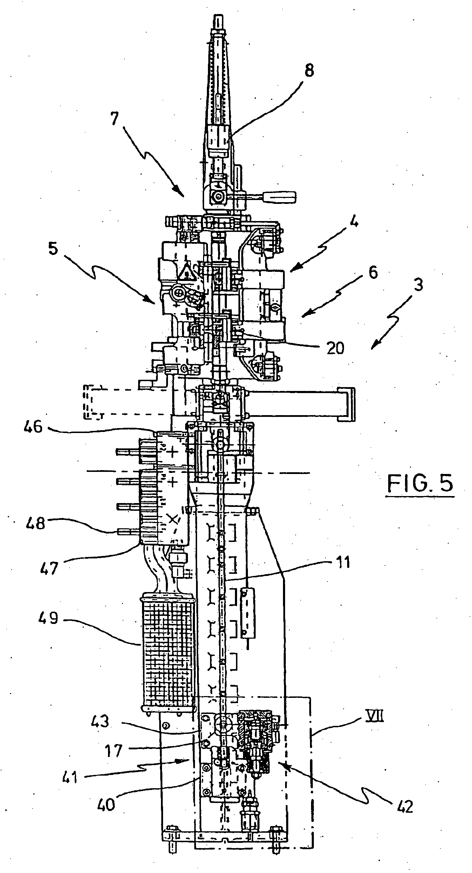

Fig. 5 zeigt eine gegenüber der Darstellung in Fig. 1 abgewandelte Darstellung der Blasstation (3) bei einer Blickrichtung von vorne. Insbesondere ist aus dieser Darstellung erkennbar, daß die Reckstange (11) von einem Reckstangenträger (41) gehaltert ist, der aus einem Trägersockel (40) und einem über ein Kupplungselement (42) mit dem Trägersockel (40) verbundenen Rollenträger (43) ausgebildet ist. Der Rollenträger (43) haltert die Führungsrolle (17), die zur Positionierung des Recksystems dient. Die Führungsrolle (17) wird entlang einer nicht dargestellten Kurvenbahn geführt. Es ist hier eine vollständige mechanische Steuerung des Reckvorganges realisiert.

Das in Fig. 5 veranschaulichte Kupplungselement (42) kann auch bei der Ausführungsform gemäß Fig. 1 zur Ermöglichung einer vollständigen mechanischen Entkopplung der Zylinder (12) voneinander bzw. von einem Tragelement für die Führungsrolle (17) eingesetzt werden.

Fig. 5 veranschaulicht einen eingerasteten Zustand des Kupplungselementes (42), in dem der Trägersockel (40) und der Rollenträger (43) miteinander durch das Kupplungselement (42) verbunden sind. Es liegt hierdurch eine starre mechanische Kopplung vor, die dazu führt, daß eine Positionierung der Führungsrolle (17) direkt und unmittelbar in eine Positionierung der Reckstange (11) umgesetzt wird. Es liegt hierdurch in jedem Bewegungszustand des Blasrades (25) eine exakt vorgegebene Positionierung der Reckstange (11) vor und die Positionierung der Reckstange (11) wird bei einer Mehrzahl von auf dem Blasrad (25) angeordneten Blasstationen (3) bei jeder Blasstation (3) exakt reproduziert. Diese exakte mechanische Vorgabe der Positionierung der Reckstange (11) trägt zu einer hohen Produktqualität sowie zu einer hohen Gleichmäßigkeit der hergestellten Behälter (2) bei.

Fig. 5 zeigt ebenfalls die Anordnung eines Pneumatikblockes (46) zur Blasdruckversorgung der Blasstation (3). Der Pneumatikblock (46) ist mit Hochdruckventilen (47) ausgestattet, die über Anschlüsse (48) an eine oder mehrere Druckversorgungen angeschlossen werden können. Nach einer Blasformung der Behälter (2) wird in eine Umgebung abzuleitende Blasluft wird über den Pneumatikblock (46) zunächst einem Schalldämpfer (49) zugeführt.

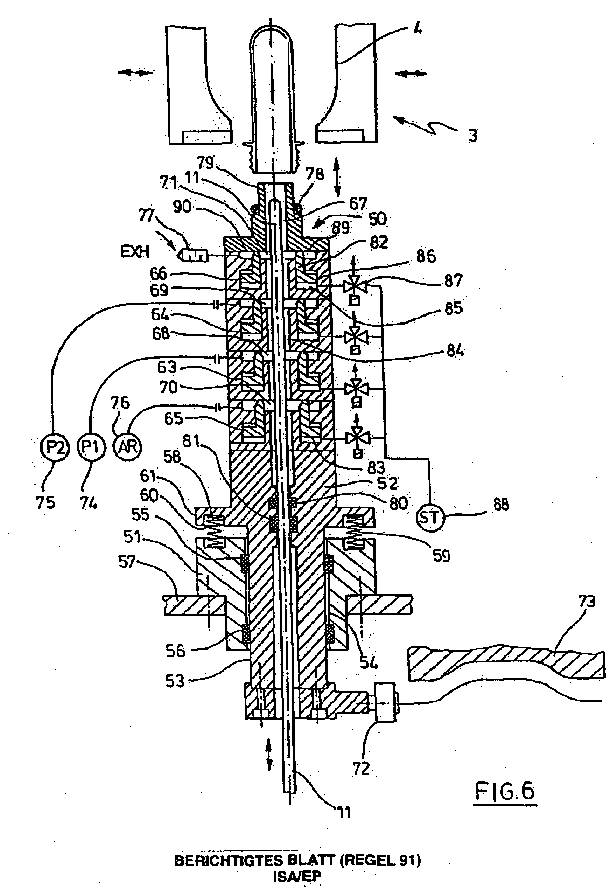

Fig. 6 zeigt eine Ausführungsform, bei der zur Zuführung von Blasluft ein Anschlußelement (50) im Bereich der Blasstation (3) angeordnet ist, das im wesentlichen aus einem relativ zur Blasform (4) unbeweglich angeordneten Basisteil (51) sowie einem relativ zum Basisteil (51) beweglich geführten Ventilträger (52) ausgebildet ist. Der Ventilträger (52) erstreckt sich mindestens bereichsweise zwischen dem Basisteil (51) und der Blasform (4). Gemäß der Ausführungsform in Fig. 6 ist der Ventilträger (52) mit einem Trägerschaft (53) in einer Ausnehmung (54) des Basisteils (51) geführt. Eine exakte Führung des Trägerschaftes (53) in der Ausnehmung (54) wird durch Lager (55, 56) unterstützt. Das Basisteil (51) ist bei der in Fig. 6 dargestellten Ausführungsform mit einer Tragstruktur (57) verschraubt, die als Teil des Blasrades (25) ausgebildet sein kann. Die Verwendung von Anschlußelementen (50) gemäß Fig. 6 ist aber auch bei ortsfesten Blasstationen möglich.

Das Basisteil (51) und der Ventilträger (52) können durch Federn (58, 59) miteinander gekoppelt werden. Die Federn (58, 59) können sowohl als Druckfedern als auch als Zugfedern realisiert werden. Durch die Federn (58, 59) wird erreicht, daß lediglich eine aktive Positionierbewegung für den Ventilträger (52) vorgegeben werden muß und daß nach Beendigung einer Beauschlagung mit einer Stellkraft der Ventilträger (52) automatisch in eine Grundpositionierung zurückkehrt. Abhängig von der Realisierung der Federn (58, 59) als Druckfedern oder als Zugfedern kann die Grundpositionierung sowohl eine gemäß der Darstellung in Fig. 6 angesenkte Positionierung des Ventilträgers (52) als auch eine angehobene Positionierung des Ventilträgers (52) darstellen.

Die Federn (58, 59) können in Vertiefungen (60, 61) des Basisteiles (51) und des Ventilträgers (52) positioniert werden. Hierdurch ist es möglich, trotz der Verwendung der Federn (58, 59) eine möglichst dichte Anordnung des Basisteiles (51) und des Ventilträgers (52) vorgeben zu können.

Bei der in Fig. 6 dargestellten Ausführungsform erfolgt eine Blasverformung der Vorformlinge (1) in Behälter (2) mit den Mündungsabschnitten in lotrechter Richtung nach unten orientiert. Die Anordnung kann aber auch gegenüber der Darstellung in Fig. 6 um 180 ° Grad gedreht eingesetzt werden, so daß die Vorformlinge (1) mit ihren Mündungsabschnitten in lotrechter Richtung nach oben in die Behälter (2) umgeformt werden.

Fig. 6 zeigt eine Ausführung des Anschlußelementes (50) derart, daß Blasluftventile (63, 64), ein Blasluftrückführventil (65) sowie ein Entlüftungsventil (66) direkt am Ventilträgers (52) angeordnet und gemeinsam mit diesem positionierbar sind. Ein Innenraum (67) des Ventilträgers (52) ist über Verbindungskanäle (68, 69, 70, 71) mit den jeweiligen Ventilen (63, 64, 65, 66) verbunden. Eine Positionierung des Ventilträgers (52) kann kurvengesteuert derart erfolgen, daß eine mit dem Ventilträger (52) verbundene Kurvenrolle (72) entlang einer Steuerkurve (73) geführt wird. Das Blasluftventil (63) ist mit einer Niederdruckversorgung (74) verbunden, das Blasluftventil (64) ist an eine Hochdruckversorgung (75) angeschlossen. Das Blasluftrückführventil (65) ist mit einem Rückführsystem (76) verbunden und das Entlüftungsventil (66) ist an einen Schalldämpfer (77) angeschlossen.

Zur Unterstützung einer verlustarmen Blasdruckzufuhr zum Vorformling (1) ist der ventilträger (52) im Bereich seiner der Blasform (4) zugewandten Ausdehnung mit einer Dichtung (78) versehen. Die Dichtung (78) kann als ein Dichtring ausgeführt sein, der bereichsweise einen in den Mündungsbereich des Vorformlings (1) einführbaren Stutzen (79) umgibt. Zur weiteren Vermeidung von Druckverlusten ist die Reckstange (11) über eine Dichtung (80) relativ zum ventilträger (52) abgedichtet. Eine Führung der Reckstange (11) wird durch ein im Bereich des Ventilträgers (52) angeordnetes Lager (81) unterstützt.

Die Ventile (63, 64, 65, 66) sind jeweils derart aufgebaut, daß eine im wesentlichen ringförmige Gestaltung vorliegt. Die Ventile (63, 64, 65, 66) sind hierzu mit einem buchsenartigen Ventilkörper (82) sowie einem vom Ventilkörper (82) gehalterten Ventilflansch (83) ausgestattet. Insbesondere ist daran gedacht, den Ventilkörper (82) im wesentlichen koaxial zum Innenraum (67) anzuordnen, der einen Hauptkanal (84) bereitstellt. Innerhalb des Hauptkanales (84) erstreckt sich die Reckstange (11). Insbesondere ist daran gedacht, den Ventilflansch (83) bezüglich des Hauptkanales (84) außenseitig am Ventilkörper (82) anzuordnen, damit der Ventilkörper (82) mit einem möglichst geringem Abstand zum Hauptkanal (84) positionierbar ist.

Gemäß einem Ausführungsbeispiel weist der Ventilkörper (82) eine buchsenförmige Gestaltung mit im wesentlichen kreisförmigem Querschnitt auf. Es sind aber auch beliebige andere Gestaltungen möglich, die einen geschlossenen Umlauf um den Hauptkanal (84) herum bereitstellen. Vorzugsweise sind die entsprechenden Gestaltungen gerundet konturiert, grundsätzlich sind aber auch eckige Gestaltungen, beispielsweise eine quadratische oder eine sechseckige Gestaltung, möglich.

Die Ventilflansche (83) sind jeweils in Steuerräumen (85) des Ventilträgers (52) angeordnet. Über Anschlußkanäle (86) sind die Steuerräume (85) mit Pilotventilen (87) verbunden, die vorzugsweise als elektromagnetisch betätigte Ventile ausgebildet sind. Die Pilotventile (87) sind an eine Steuerluftversorgung (88) angeschlossen. Bei einem Öffnen eines der Pilotventile (87) strömt die Steuerluft in den jeweils zugeordneten Steuerraum (85) und verschiebt den Ventilkörper (82) in eine Verschlußpositionierung. Der ventilkörper (82) stößt hierbei mit einer Dichtfläche (89) gegen eine Andruckfläche (90). Bei einem Schließen des Pilotventils (87) erfolgt eine Entlüftung des Steuerraumes (85) und der Ventilkörper (82) wird vom einwirkenden Anschlußdruck in die Öffnungspositionierung zurückgedrückt.

Der Ventilflansch (83) ist derart dimensioniert, daß dieser für den Steuerdruck eine größere Einwirkungsfläche bereitstellt, als im Bereich der Dichtfläche (89) realisiert ist. Hierdurch ist ein vergleichsweise geringer Steuerdruck ausreichend, um den Ventilkörper (82) gegen den einwirkenden Arbeitsdruck in die Verschlußpositionierung zu überführen.

Gemäß einem typischen Funktionsablauf bei der in Fig. 6 dargestellten räumlichen Orientierung der Vorformlinge (1) mit ihren Mündungsabschnitten in lotrechter Richtung nach unten erfolgt nach einem Schließen der Blasform (4) ein Anheben des Ventilträgers (52) so lange, bis die Dichtung (78) gegen den Rand des Mündungsbereiches des Vorformlings (1) geführt ist. Koordiniert zu einem Einfahren der Reckstange (11) in den Vorformling (1) öffnet zunächst das Blasluftventil (63) zur Zufuhr eines niedrigeren Blasdruckes und nach einem Schließen des Blasventils (63) öffnet das Blasventil (64) zur Zufuhr des höheren Blasdruckes. Nach einem Abschluß des Blasvorganges öffnet bei Verwendung eines Blasluftrückführsystems zunächst das Blasluftrückführventil (65) und nach einem Schließen des Ventils das Entlüftungsventil (66). Der Ventilträger (52) wird anschließend in seine Grundpositionierung zurückgefahren und die Blasform (4) öffnet, um den fertig geblasenen Behälter (2) entnehmen zu können.

Vorteilhaft in der Ausführungsform gemäß Fig. 6 ist insbesondere die axiale Positionierung des Ventilträgers (52) entlang einer Längsachse der Reckstange (11). Der Vorformling (1), der Ventilträger (52) und das Basisteil (51) erstrecken sich jeweils entlang der Längsachse der Reckstange (11).

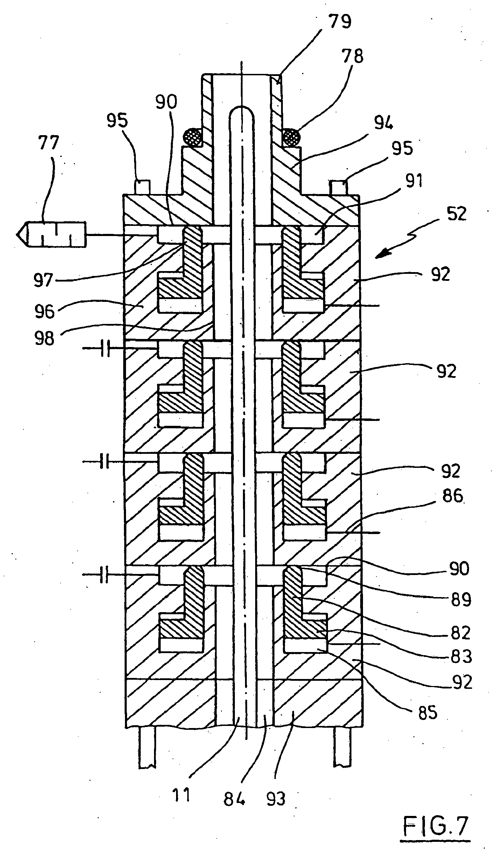

Gemäß der Ausführungsform in Fig. 7 sind die Ventilkörper (82) im Bereich ihrer den Ventilflanschen (83) abgewandeten Ausdehnungen von Versorgungsräumen (91) umgeben. In einer Position der Ventilkörper (82) in einer den Strömungskanal freigebenden Anordnung sind die Versorgungsräume (91) mit dem Hauptkanal (84) verbunden, so daß entweder eine Zuströmung oder Ableitung des unter Druck stehenden Mediums möglich ist.

Gemäß der Ausführungsform in Fig. 7 besteht der Ventilkörper (82) aus einer Mehrzahl von Ventilmodulen (92), die in einer Längsrichtung übereinander angeordnet sind. Die jeweils außenseitigen Ventilmodule (92) werden von einem Basiselement (93) bzw. einem Deckelelement (94) begrenzt. Das Deckelelement (94) trägt unter anderem den Stutzen (79).

Zur Bereitstellung einer ausreichenden mechanischen Stabilität sowie einer ausreichenden Abdichtung sind die Ventilmodule (92), das Basiselement (93) und das Deckelelement (94) miteinander verbunden und gegeneinander verspannt. Dies kann beispielsweise durch Spannelemente (95) erfolgen, die als Schrauben ausgebildet sein können.

Eine besonders einfache Ausführungsform wird dadurch bereitgestellt, daß jeweils Begrenzungsflächen der Ventilmodule (92) bzw. des Deckelelementes (94) als Andruckfläche (90) ausgebildet sind. Hierdurch wird die Stapelbarkeit der Ventilmodule (92) erleichtert.

Alle Ventilmodule (92) sind vorzugsweise identisch konstruiert. Der Ventilkörper (82) mit Ventilflansch (83) wird dabei von einem Modulgehäuse (96) gehaltert und geführt. Vom Modulgehäuse sind der Steuerraum (5) und der Versorgungsraum (91) begrenzt. Der Ventilkörper (82) ist zwischen einem Führungssteg (97) des Modulgehäuses (96) und einer Innenwand (98) geführt, die den Hauptkanal (84) begrenzt.

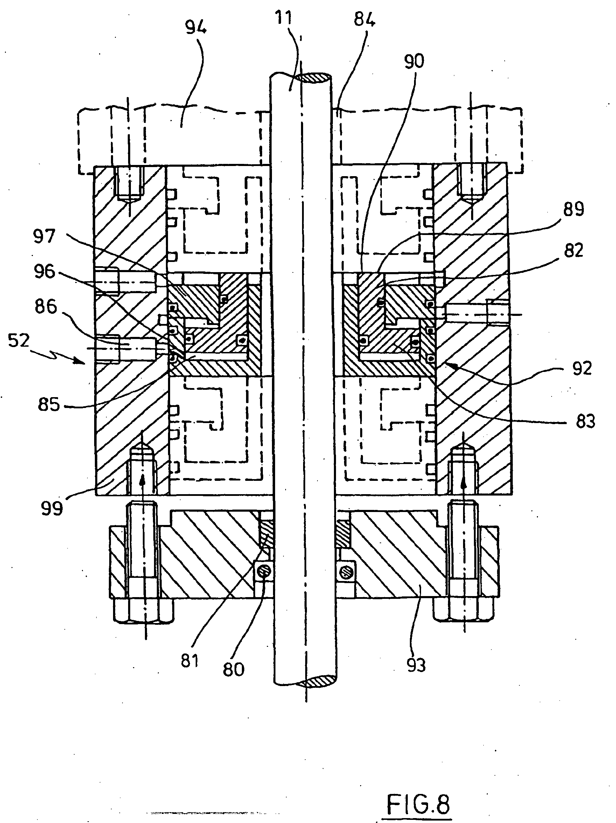

Fig. 8 zeigt eine Darstellung eines Querschnittes durch ein Ventilmodul (92) sowie zwei schematisch skizzierte Ventilmodule (92). Das Ventil ist im dargestellten Betriebszustand geschlossen, so daß sich kein Abstand zwischen der Dichtfläche (89) des Ventilkörpers (82) und der Andruckfläche (90) erstreckt. Ein einfacher Zusammenbau der Einzelteile des Ventilmoduls (92) wird dadurch unterstützt, daß der Führungssteg (97) als Teil eines getrennt vom Modulgehäuse (96) ausgebildeten Führungseinsatzes realisiert ist. Es ergibt sich hierdurch ein im wesentlichen dreiteiliger Aufbau der Ventilmodule (92) aus dem Modulgehäuse (96), dem Ventilkörper (82) mit Ventilflansch (83) sowie dem Führungselement (97).

Gegenüber einer von der Darstellung in Fig. 7 abweichenden Ausführungsform ist es auch möglich, den Ventilträger (52) im Bereich der Ventilmodule (92) gehäuseartig auszubilden und die Ventilmodule (92) in diesen gehäuseartigen Ventilträger (52) einzusetzen. Eine derartige Ausführungsform erleichtert eine Bereitstellung der erforderlichen Zuström- und Abströmkanäle sowie eine Verbindung mit den Pilotventilen (87) sowie den Versorgungen (74, 75), dem Rückführsystem (76) sowie dem Schalldämpfer (77). Darüber hinaus wird durch eine derartige Konstruktion auch die mechanische Stabilität unterstützt, die eine kompakte Anordnung aller benötigten Bauelemente erleichtert.

Der Ventilkörper (82) ist mit Dichtungen sowohl gegenüber dem Modulgehäuse (96) als auch gegenüber dem Führungssteg (97) abgedichtet geführt. Hierdurch werden Druckverluste vermieden. Die Dichtungen können als O-Ringe realisiert sein. Darüber hinaus erfolgt eine Abdichtung des Modulgehäuses (96) und des Führungssteges (97) über entsprechende Dichtungen, die ebenfalls als O-Ringe ausgebildet sein können, gegenüber einem Gehäuse (99) des Ventilträgers (52). Als Material für den Ventilkörper (82) kann ein Kunststoff verwendet werden. Das Modulgehäuse (96) wird vorzugsweise aus Aluminium oder Stahl realisiert, wobei vorzugsweise ebenfalls beschichtete Oberflächen verwendet werden, um eine glatte Oberflächenstruktur bereitzustellen. Das Gehäuse (99) wird vorzugsweise aus Aluminium realisiert.

Zur Ermöglichung einer Entlüftung des Raumes zwischen dem Ventilflansch (83) und dem Führungssteg (97) wird eine Schnaufraumbelüftung eingesetzt, um aufgrund einer Bewegung des Ventilkörpers (82) resultierende Volumenveränderungen dieses Schnaufraumes durch Belüftung bzw. Entlüftung zu kompensieren.

## Patentansprüche

1. Vorrichtung zur Blasformung von Behältern (2), die mindestens eine Blasstation mit einer Blasform (3) aufweist, sowie bei der sich ein Strömungsweg für ein Blasgas zur Blasformung der Behälter (2) durch ein Anschlusselement (50) hindurch erstreckt, das einen Ventilträger (52) aufweist, der mindestens ein Ventil (63-66) haltert, **dadurch gekennzeichnet, dass** das Ventil (63-66) einen Hauptkanal (84) des Ventilträgers (52) ringartig umgibt, wobei jeweils ein in einem Modulgehäuse (96) angeordnetes Ventil ein Ventilmodul (92) ausbildet, und wobei mindestens zwei Ventilmodule (96) in einer Längsrichtung des Ventilkörpers (82) übereinander angeordnet sind.

2. Vorrichtung nach Anspruch 1, **dadurch gekennzeichnet, dass** das Ventil in einer Längsrichtung des Ventilträgers (52) positionierbar angeordnet ist.

3. Vorrichtung nach Anspruch 1 oder 2, **dadurch gekennzeichnet, dass** sich ein Ventilkörper (82) des Ventils im wesentlichen koaxial zu einem Hauptkanal (84) des Ventilkörpers (82) erstreckt.

4. Vorrichtung nach einem der Ansprüche 1 bis 3, **dadurch gekennzeichnet, dass** das Ventil pneumatisch betätigt ausgebildet ist.

5. Vorrichtung nach einem der Ansprüche 1 bis 4, **dadurch gekennzeichnet, dass** der Ventilkörper (82) bereichsweise von einem ringartigen Versorgungsraum (91) umgeben ist.

6. Vorrichtung nach einem der Ansprüche 1 bis 5, **dadurch gekennzeichnet, dass** der Versorgungsraum (91) relativ zum Hauptkanal (84) außenseitig am Ventilkörper (82) angeordnet ist.

7. Vorrichtung nach einem der Ansprüche 1 bis 6 , **dadurch gekennzeichnet, dass** der Ventilkörper (82) buchsenartig ausgebildet und mit einem Ventilflansch (83) verbunden ist.

8. Vorrichtung nach Anspruch 7, **dadurch gekennzeichnet, dass** der Ventilflansch (83) in einem Steuerraum (85) angeordnet ist.

9. Vorrichtung nach Anspruch 8, **dadurch gekennzeichnet, dass** der Steuerraum (85) mit einem Pilotventil (87) verbunden ist.

10. Vorrichtung nach einem der Ansprüche 1 bis 9, **dadurch gekennzeichnet, dass** im Bereich des Hauptkanales (84) eine Reckstange (11) angeordnet ist.

11. Vorrichtung nach einem der Ansprüche 1 bis 10, **dadurch gekennzeichnet dass** die Ventilmodule (92) abdichtend gegeneinander verspannt angeordnet sind.

12. Vorrichtung nach einem der Ansprüche 1 bis 11 , **dadurch gekennzeichnet, dass** der Ventilkörper (82) in einer Verschlusspositionierung mit einer Dichtfläche (89) gegen eine Andruckfläche (90) geführt ist, die von einem benachbarten Ventilmodul (92) bereitgestellt ist.

13. Vorrichtung nach einem der Ansprüche 1 bis 12, **dadurch gekennzeichnet, dass** im Bereich des Ventilträgers (52) mindestens ein Drucksensor angeordnet ist.

## Claims

1. Apparatus for blow-moulding containers (2), which has at least one blowing station with a blowing mould (3) and in which a flow path for a blowing gas for blow-moulding the containers (2) extends through a connecting element (50) having a valve carrier (52) which supports at least one valve (63-66), **characterised In that** the valve (63-66) surrounds a main duct (84) of the valve carrier (52) in annular fashion, wherein a valve arranged in a module housing (96) forms a valve module (92) in each case, and wherein at least two valve modules (96) are arranged one above the other in a longitudinal direction of the valve body (82).

2. Apparatus according to Claim 1, **characterised in that** the valve is arranged such that it can be positioned in a longitudinal direction of the valve carrier (52).

3. Apparatus according to Claim 1 or 2, **characterised In that** a valve body (82) of the valve extends substantially coaxially with respect to a main duct (84) of the valve body (82).

4. Apparatus according to one of Claims 1 to 3, **characterised in that** the valve is of pneumatically actuated designed.

5. Apparatus according to one of Claims 1 to 4, **characterised in that** the valve body (82) is regionally surrounded by an annular supply space (91).

6. Apparatus according to one of Claims 1 to 5, **characterised in that** the supply space (91) is arranged on the outside of the valve body (82) relative to the main duct (84).

7. Apparatus according to one of Claims 1 to 6, **characterised in that** the valve body (82) is of bush-like design and is connected to a valve flange (83).

8. Apparatus according to Claim 7, **characterised in that** the valve flange (83) is arranged in a control space (85).

9. Apparatus according to Claim 8, **characterised In that** the control space (85) is connected to a pilot valve (87).

10. Apparatus according to one of Claims 1 to 9, **characterised In that** a stretch rod (11) is arranged in the region of the main duct (84).

11. Apparatus according to one of Claims 1 to 10, **characterised In that** the valve modules (92) are arranged in a manner braced sealingly against one another.

12. Apparatus according to one of Claims 1 to 11, **characterised in that**, in a closed positioning, the valve body (82) has a sealing surface (89) guided against a press-against surface (90) provided by a neighbouring valve module (92).

13. Apparatus according to one of Claims 1 to 12, **characterised In that** at least one pressure sensor is arranged in the region of the valve carrier (52).

## Revendications

1. Dispositif de soufflage de récipients (2) qui présente au moins un poste de soufflage (3) avec un moule de soufflage, ainsi que dans lequel une voie d'écoulement d'un gaz, utilisé pour le formage par soufflage des récipients (2), s'étend à travers un élément de raccordement (50), qui présente un support de soupapes (52), qui porte au moins une soupape (63-66), **caractérisé en ce que** la soupape (63-66) entoure, à la manière d'un anneau, un canal principal (84) du support de soupapes (52), chaque soupape disposée dans un boîtier modulaire (96) étant formée un module de soupape (92) et deux modules de soupape (96) au moins étant disposés l'un au-dessus de l'autre dans une direction longitudinale du corps de soupape (82).

2. Dispositif selon la revendication 1, **caractérisé en ce que** la soupape est agencée de manière à pouvoir être positionnée dans une direction longitudinale du support de soupapes (52).

3. Dispositif selon revendication 1 ou 2, **caractérisé en ce qu'**un corps de soupape (82) s'étend essentiellement coaxialement par rapport à un canal principal (84) du corps de soupape (82).

4. Dispositif selon l'une des revendications 1 à 3, **caractérisé en ce que** la soupape est actionnée pneumatiquement.

5. Dispositif selon l'une des revendications 1 à 4, **caractérisé en ce que** le corps de soupape (82) est entouré, par sections, par un espace d'alimentation (91) en forme d'anneau.

6. Dispositif selon l'une des revendications 1 à 5, **caractérisé en ce que** l'espace d'alimentation (91) est disposé, par rapport au canal principal (84), sur le côté extérieur du corps de soupape (82).

7. Dispositif selon l'une des revendications 1 à 6, **caractérisé en ce que** le corps de soupape (82) est formé à la manière d'une douille, et est relié à une bride (83) de la soupape.

8. Dispositif selon la revendication 7, **caractérisé en ce que** la bride (83) de la soupape est disposée dans un espace de commande (85).

9. Dispositif selon la revendication 8, **caractérisé en ce que** l'espace de commande (85) est relié à une vanne-pilote (87).

10. Dispositif selon l'une des revendications 1 à 9, **caractérisé en ce que**, dans la région du canal principal (84), est installée une barre d'étirage (11).

11. Dispositif selon l'une des revendications 1 à 10, **caractérisé en ce que** les modules de soupapes (92) sont disposés serrés, étanches les uns par rapport aux autres.

12. Dispositif selon l'une des revendications 1 à 11, **caractérisé en ce que** le corps de soupape (62) est appliqué, dans une position de fermeture, avec une surface d'étanchéité (89) contre une surface de butée (90), que présente un module de soupape (92) voisin.

13. Dispositif selon l'une des revendications 1 à 12, **caractérisé en ce que**, dans la région du support de soupapes (52), est installé au moins un capteur de pression.
